# FASCICULE DE BREVET EUROPEEN

(11) **EP 3 235 332 B1**
(45) Date de publication et mention de la délivrance du brevet: **06.02.2019**
(21) Numéro de dépôt: 15823621.6
(22) Date de dépôt: 09.12.2015
(51) Int. Cl.: H04W 28/18, H04W 76/10

(54) **PROCÉDÉ DE CONTRÔLE D'UNE COMMUNICATION TÉLÉPHONIQUE INITIÉE PAR UN TERMINAL CONNECTÉ À UN RÉSEAU DE COMMUNICATION**
VERFAHREN ZUR STEUERUNG EINES TELEFONANRUFS, DER DURCH EIN MIT EINEM KOMMUNIKATIONSNETZWERK VERBUNDENES ENDGERÄT INITIIERT WIRD
METHOD FOR CONTROLLING A PHONE CALL INITIATED BY A TERMINAL CONNECTED TO A COMMUNICATIONS NETWORK

(30) Priorité: 16.12.2014 FR 1462553
(43) Date de publication de la demande: 25.10.2017
(73) Titulaire: Orange, 75015 Paris (FR)
(72) Inventeur: BOUVET, Bertrand, 22700 Perros Guirec (FR)
(86) Numéro de dépôt international: PCT/FR2015/053385
(87) Numéro de publication internationale: WO 2016/097533

(56) Documents cités:
- WO-A1-2007/001143
- US-A1- 2010 303 060
- US-A1- 2012 002 540
- US-A1- 2014 254 484
- YASUSI KANADA ED - HENRIK PERSSON ET AL: "Policy-based End-to-End QoS Guarantee Using On-Path Signaling for Both QoS Request and Feedback", INFORMATION NETWORKING, 2008. ICOIN 2008. INTERNATIONAL CONFERENCE ON, IEEE, PISCATAWAY, NJ, USA, 23 janvier 2008 (2008-01-23), pages 1-5, XP031238788, ISBN: 978-89-960761-1-7

## Description

### DOMAINE TECHNIQUE GENERAL

La présente invention concerne le domaine des communications téléphoniques.

Plus précisément, elle concerne un procédé de contrôle d'une communication téléphonique initié par un premier terminal.

### ETAT DE L'ART

Les offres tarifaires des services de télécommunications proposées par les opérateurs des réseaux de communication ou les fournisseurs de service de communication ne cessent d'évoluer pour généralement aller vers des offres de services payées par forfait. Par exemple, des tels services sont proposés aux utilisateurs pour la téléphonie fixe VoIP (pour Voice Over IP en anglais). Pour ces services, les destinations fixes France (tels que les numéros non surtaxés commençant par 01, 02, 03, 04, 05, 087, ou 09) et mobiles France (tels que les numéros commençant 06 ou 07) font généralement partie du forfait payé par l'utilisateur abonné auprès de l'opérateur ou du fournisseur de service. En général, il n'y a pas de supervision temps réel pour ces numéros standards appelés.

A contrario, les numéros destinataires de type services à valeur ajoutés (i.e. les services téléphoniques surtaxés, appelés également Audiotel) vers la France ou l'International ne font souvent pas partie du forfait. Des communications émises à destination de tels numéros surtaxés sont supervisés via un réseau dit « intelligent ». Un serveur anti-fraude du réseau intelligent est déclenché lorsqu'un commutateur fixe du réseau de communication détecte une appartenance du numéro appelé à un groupe de numéros surtaxés français ou internationaux. La signalisation d'appel est transmise au serveur antifraude qui, à partir du numéro appelant et du numéro appelé, détermine si l'appel peut être acheminé ou non.

S'il s'agit du premier appel du même numéro appelant vers un numéro appelé surtaxé, l'appel est autorisé par le serveur antifraude et la signalisation d'appel est transmise vers le destinataire associé au numéro surtaxé, le compteur d'appels surtaxés pour le client appelant étant incrémenté soit en nombre d'appels, soit en durée d'appel. Si au contraire une limite d'appels surtaxés dans une période donnée est atteinte, la demande d'appel est rejetée et un film vocal peut être diffusé à l'appelant pour lui indiquer qu'il a dépassé le quota autorisé ou bien l'appel est immédiatement rejeté. Quand la période de calcul de limiteur d'appel arrive à échéance, par exemple toutes les 24H, les informations présentes dans la base de données du serveur antifraude sont réinitialisées pour autoriser les appels de numéros surtaxés à chacun des clients.

On constate que le serveur antifraude a des capacités limitées et donc que ce système est efficace pour un nombre limité de destinations (dans le cas précis pour les groupes de numéros surtaxés en France et à l'international). Il ne faudrait pas que tous les appels transitent par ce serveur antifraude, sans quoi il faudrait redimensionner les liens entre les commutateurs et les serveurs du réseau intelligent. D'autre part, on remarque que l'algorithme du serveur antifraude est simple : soit l'appel sortant est autorisé, soit l'appel sortant est rejeté.

Un tel mécanisme binaire est pourtant limitant. En effet, les forfaits tarifaires évoluent en permanence. Par exemple, sur le réseau VoIP fixe, il est proposé en plus des forfaits standards VoIP des forfaits payants additionnels pour certaines destinations cibles. Par exemple, de tels forfaits payants additionnels permettent à un utilisateur de bénéficier d'offres d'appels illimités VoIP de la France vers la destination cible.

Cependant, avec une telle offre de service, certains utilisateurs mal intentionnés peuvent tentés de frauder l'offre de service, par exemple en utilisant de manière abusive le service proposé ou en proposant l'utilisation du service à d'autres personnes extérieures au foyer de l'utilisateur abonné au service.

Avec le système de facturation forfaitaire classique et les contraintes du serveur antifraude (déclenchement uniquement sur certains numéros appelés), la fraude peut difficilement être maitriser.

Il est possible de configurer le déclenchement du serveur antifraude pour quelques préfixes internationaux ciblés et de configurer des règles du type cinq appels maximum par jour (de durée 8H maximum par appel). Mais de telles règles ne permettent pas une supervision efficace du point de vue de l'utilisateur abonné car certains utilisateurs abonnés vont par exemple attacher plus d'importance au nombre d'appels maximum autorisés par jour qu'à la durée totale des communications. De plus, vu le nombre important de destinations internationales possibles, il n'est pas possible de superviser tous les numéros internationaux par ce mécanisme.

Le même problème se pose avec des offres de service d'appels illimités en VoIP mobile.

C'est pourquoi, il semble opportun de créer un nouveau système de filtrage de communication VoIP (audio ou visiophonique) plus sophistiqué pour d'une part limiter la fraude potentielle, et d'autre part répondre aux exigences de l'offre commerciale de l'illimité. Le même principe doit pouvoir s'appliquer sur réseau fixe et sur réseau mobile.

Le document US20120002540A1 décrit un procédé d'autorisation et de calcul d'une qualité de service par un noeud PCRF en réponse à la réception d'une demande de service par un utilisateur avec une qualité de service requise.

Le document US20140254484A1 décrit une méthode de communication avec une qualité de service requise via un serveur IMS entre un premier et un deuxième utilisateurs. Lorsque le premier utilisateur ne dispose pas d'une QoS suffisante, la méthode permet au premier utilisateur d'emprunter une QoS additionnelle au deuxième utilisateur si le deuxième utilisateur l'autorise et s'il dispose d'une QoS suffisante.

### PRESENTATION DE L'INVENTION

La présente invention se rapporte ainsi selon un premier aspect à un procédé de contrôle d'une communication téléphonique initiée par un premier terminal connecté à un réseau de communication via un réseau selon la revendication 1.
Par communication téléphonique, on entend ici et dans la suite de la description une communication audio ou visiophonique.

Grâce au procédé selon l'invention, il est possible de mettre en oeuvre un mode dégradé intermédiaire, par rapport au mode binaire antérieur. Ce mode permet de mettre en place un système de « fair use » universel, pratique et efficace. Un tel procédé peut être mis en oeuvre pour une communication téléphonique à établir via un réseau de communication fixe ou via un réseau de communication mobile.

Le procédé selon l'invention peut être mis en oeuvre par un serveur applicatif du réseau opérateur ou par un serveur de gestion de la qualité de la communication (dit PCRF pour Policy and Charging Control Function en anglais) du réseau opérateur.

Par ailleurs, lorsque le procédé est mis en oeuvre sur un réseau de communication fixe, selon un mode particulier de réalisation de l'invention, le présent procédé peut être mis en oeuvre par le serveur antifraude. Dans ce cas, une telle mise en oeuvre ne nécessite qu'une modification logicielle au niveau du serveur applicatif téléphonique existant, et permet de réutiliser le serveur antifraude et tous les autres équipements du réseau opérateur.

Lorsque le procédé est mis en oeuvre sur un réseau de communication mobile, il offre une solution simple à mettre en oeuvre pour contrôler les communications établies via le réseau de communication mobile.

Lorsqu'il est mis en oeuvre par un serveur applicatif du réseau opérateur, le procédé selon l'invention permet de contrôler à la fois les communications établies via le réseau de communication fixe et les communications établies via le réseau de communication mobile.

On s'affranchit ainsi de toutes les contraintes de l'art antérieur.
Selon un mode particulier de réalisation de l'invention, la requête relative à une demande d'établissement d'une communication téléphonique est une requête de réservation de ressources pour établir la communication entre le premier terminal et le deuxième terminal.
Selon un autre mode particulier de réalisation de l'invention, la requête relative à une demande d'établissement d'une communication téléphonique est une demande d'établissement d'une communication téléphonique émise par le premier terminal.

Selon d'autres caractéristiques avantageuses et non limitatives :
- l'étape (b) est mise en oeuvre seulement si l'identifiant du deuxième terminal appartient à une liste d'identifiants appelés à surveiller du serveur applicatif ;
- ladite base de données d'identifiants est celle d'un serveur de vérification, l'étape (b) comprenant :
   - l'émission d'une requête auxiliaire à destination du serveur de vérification, ladite requête comprenant l'identifiant du premier terminal et l'identifiant du deuxième terminal, et
   - la réception d'une réponse à ladite requête auxiliaire indiquant si le mode de communication dégradée doit être activé.
- le réseau de communication est un réseau circuit, et le réseau opérateur est un réseau IMS (IP Multimedia Subsystem) ;
- le serveur de vérification est connecté au serveur applicatif téléphonique via une interface choisie parmi IM-SSF (IP Multimedia Service Switching Function), LDAP (Lighweight Directory Access Protocol), HTTP (Hyper Text Transfer Protocol) et DIAMETER ;
- ledit paramètre descriptif est conforme au format SDP (Session Description Protocol) ;
- ledit paramètre descriptif initial est représentatif d'un codec audio et/ou vidéo pour la mise en oeuvre de la communication téléphonique ou visiophonique ; le paramètre descriptif modifié étant représentatif d'un codec audio ou vidéo offrant une qualité moindre que le codec audio ou vidéo initial,
- le paramètre descriptif initial est représentatif du codec audio G.711 ou G.722, le paramètre descriptif modifié étant représentatif du codec audio G.729 ;
- le paramètre descriptif initial est représentatif du codec vidéo H264, le paramètre descriptif modifié étant représentatif du codec vidéo H263 ;
- ledit paramètre descriptif est représentatif d'une longueur de trame ;
- ledit paramètre descriptif modifié est représentatif d'un mode « détecteur de silence » activé ;
- ledit paramètre descriptif modifié est représentatif d'un mode « Half Duplex » activé ;
- ledit paramètre descriptif modifié désigne un serveur média par lequel la communication doit transiter, le serveur media étant configuré pour appliquer au moins un traitement dégradant la communication.

Selon un deuxième aspect, l'invention concerne un serveur d'un réseau opérateur pour le contrôle d'une communication téléphonique initiée par un premier terminal connecté à un réseau de communication via le réseau selon la revendication 9.

Au vu de sa position dans le réseau opérateur, un tel serveur permet une mise en oeuvre aisée de ce procédé.

Selon des caractéristiques avantageuses et non limitatives, le serveur comprend en outre un module de stockage de données stockant ladite base de données d'identifiants. De manière alternative, la base de données d'identifiants est comprise dans un serveur de vérification, par exemple le serveur antifraude.

Selon un troisième et un quatrième aspect, l'invention concerne respectivement un produit programme d'ordinateur comprenant des instructions de code pour l'exécution d'un procédé selon le deuxième aspect de l'invention de contrôle d'une communication téléphonique initiée par un premier terminal connecté à un réseau de communication via un réseau opérateur ; et un support de stockage lisible par un équipement informatique sur lequel un produit programme d'ordinateur comprend des instructions de code pour l'exécution d'un procédé pour la mise en oeuvre d'un procédé selon le deuxième aspect de l'invention de contrôle d'une communication téléphonique initiée par un premier terminal connecté à un réseau de communication via un réseau opérateur.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels
- les figures 1a et 1b représentent deux architectures de réseaux pour la mise en oeuvre d'un procédé selon l'invention ;
- la figure 2 présente le procédé de contrôle selon un mode particulier de réalisation de l'invention,
- les figures 3a-3b sont deux logigrammes représentant le traitement de communications « à risques » conformément à deux modes de réalisation du procédé selon l'invention.

### DESCRIPTION DETAILLEE

### Architecture réseau

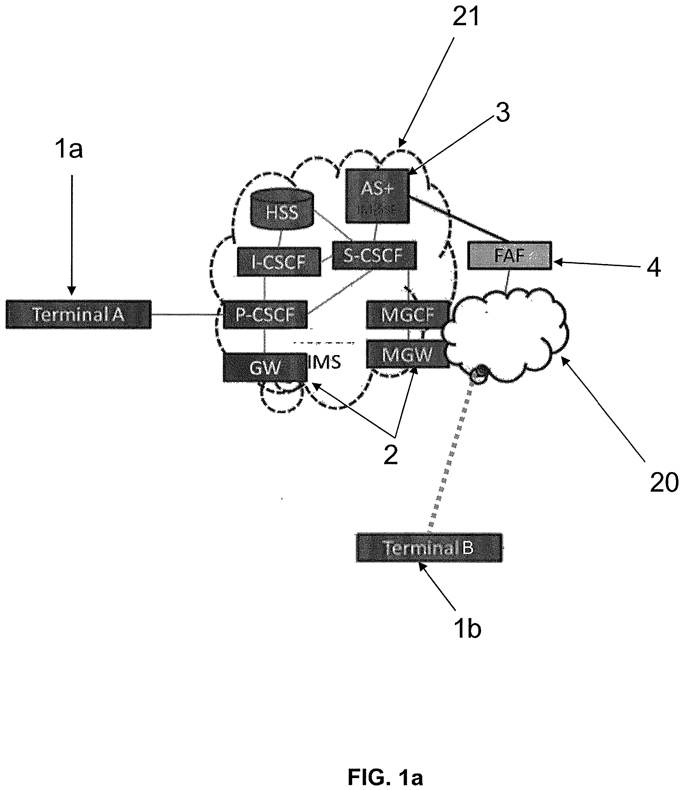

En référence à la **figure 1a**, l'invention propose un procédé de contrôle d'une communication téléphonique initiée par un premier terminal 1a connecté à un réseau de communication 20 via un réseau opérateur 21. Une telle communication téléphonique peut être une communication de type audio ouvisiophonique ; La communication est à destination d'un deuxième terminal 1b. La communication comprend ainsi au moins un flux audio. Dans le cas d'une communication visiophonique, la communication comprend un flux audio et un flux vidéo.

Le présent procédé n'est limité à aucun type de terminal 1a, 1b, celui-ci peut être n'importe quel équipement (tel qu'un téléphone fixe, un ordinateur, un terminal mobile, un serveur vocal, etc.) qui soit connecté à un réseau de communication 20 et supportant la génération et la restitution d'un flux audio et éventuellement vidéo, en d'autres termes qui comprenne une entrée audio (typiquement un microphone) et une sortie audio (typiquement un haut-parleur). Un tel terminal comprend également de manière optionnelle une entrée apte à capturer un flux vidéo, telle qu'une caméra et une sortie apte à restituer un flux vidéo, telle qu'un écran. On comprendra que le premier terminal 1a peut devenir un deuxième terminal 1b et vice-versa, en fonction des appels émis sur le réseau 20.

On note que selon un mode particulier de réalisation de l'invention, le deuxième terminal 1b est plus particulièrement un serveur d'un service téléphonique surtaxé, ses entrée et sortie audio sont donc virtuelles.

Le réseau de communication 20 désigne en particulier le réseau Internet et/ou des réseaux « circuit » de téléphonie classique (non VoIP), typiquement RTC (« Réseau téléphonique commuté ») ou GSM 2G/3G. Dans la suite de la présente description, on prendra l'exemple dans lequel le réseau 20 est le réseau circuit.

Le réseau opérateur 21 est un réseau de communication permettant la transmission de communication VoIP. Par exemple, le réseau opérateur 21 est un coeur de réseau conforme à l'architecture IMS (« IP Multimedia Subsystem », en français sous-système multimédia IP). Un réseau opérateur 21 de type IMS inter-fonctionne avec tous les types de réseaux (fixe ou mobile) via des passerelles 2, et inclut des fonctions de commutations de paquets (comme 3G UMTS, 4G LTE, le xDSL, etc.). Les systèmes plus anciens à commutation de circuits sont ainsi supportés.

Dans l'exemple préféré représenté sur la figure 1a (cas de la VoIP fixe mis en oeuvre selon le protocole SIP, pour « Session Initiation Protocol »), le premier terminal 1a est connecté à un équipement du réseau opérateur 21, appelé P-CSCF (« Proxy Call State Control Function »). Un tel équipement pilote une passerelle GW permettant le traitement et/ou la commutation des flux média.

Le P-CSCF est connecté à un I-CSCF (« Interrogating Call State Control Function ») permettant de consulter une base de données HSS (« Home Subscriber System ») de profils associés aux terminaux 1a, 1b pour l'attribution d'un équipement S-CSCF (« Serving Call State Control Function »). Un tel équipement S-CSCF est utilisé pour enregistrer le premier terminal 1a dans le coeur de réseau opérateur 21.

Lorsque le réseau de communication 20 est un réseau circuit, les appels destinés à des numéros non VoIP sont routés vers le réseau de communication 20 via une passerelle 2 de signalisation et media circuit (plus précisément une passerelle MGW (« Media Gateway ») associée à un serveur MGCF (« Media Gateway Control Function »), auxquels le S-CSCF est aussi connecté).

Le S-CSCF est enfin connecté à un serveur applicatif de téléphonie 3 (dit AS) pour exécuter des services, typiquement des services de filtrage des appels au départ ou à l'arrivée (« Originating/Terminating »), le masquage ou non du numéro appelant A, etc...

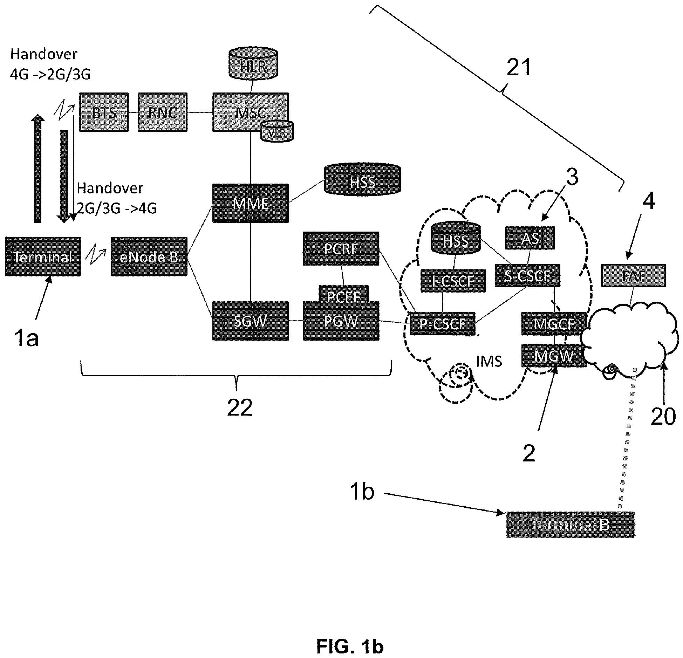

Dans un cas où le premier terminal 1a est un terminal mobile, le réseau opérateur 21 englobe un réseau de communication mobile 22 comme représenté sur la **figure 1b**.

Lorsque le réseau de communication mobile 22 est un réseau mobile 4G permettant d'offrir des services de communication de type VoIP, appelé dans ce cas VoLTE (pour Voice over Long Term Evolution en anglais), la qualité de service QoS (pour Quality of Service en anglais) à l'accès d'une communication est garanti par des mécanismes normalisés 3GPP.

En réseau mobile 2G/3G (partie haute du réseau 22 sur la figure 1b), de façon connue le premier terminal 1a se connecte en radio mobile sur une antenne BTS qui est pilotée par un équipement RNC (« Radio Network Contrôler »). Le RNC est relié au commutateur téléphonique mobile MSC (« Mobile Switch Center ») qui intègre une base de données locale VLR (« Visited Location Registration ») en charge de mémoriser le profil de l'abonné au service, de gérer la localisation du terminal, etc.

La base de données HLR (« Home Local Registration ») est la base de données centrale qui contient le profil de tous les utilisateurs ainsi que la localisation de leur terminal.

En réseau 4G (partie basse du réseau 22 sur la figure 1b), de façon également connue, le premier terminal 1a se connecte à l'antenne eNodeB qui est reliée à un équipement MME (« Mobility Management Entity ») qui lui-même est connecté à la base de données HSS EPC (« Evolved Packet Core », équivalent au HLR mais pour les besoins de la 4G. Le MME est aussi relié au SGW (« Serving Gateway ») qui est relié au PGW (« PDN Gateway », où PDN désigne un « Packet Data Network »). Les flux de signalisation liés à la gestion du mobile (attachement, fourniture d'information de localisation, etc.) transitent du premier terminal 1a, au eNodeB puis au MME.

Les flux applicatifs tels que les flux VoIP (signalisation de la communication et média) transitent du premier terminal 1a, au eNodeB, puis SGW, et PGW (via des tunnels GTP (« GPRS Tunnel Protocol »)) puis rejoignent le coeur IMS du réseau opérateur 21 composé des serveurs P-CSCF, I-CSCF, S-CSCF, AS, et MGCF+MGW tels que décrits précédemment.

Le premier noeud du réseau IMS P-CSCF traitant la signalisation SIP est interfacé avec un équipement PCRF (« Policy and Charging Rules Function ») qui lui-même est interfacé à un PCEF (« Policy and Charging Enforcement Function »). Ces équipements PCRF et PCEF sont en charge de réserver les ressources en amont dans le réseau mobile (au niveau de l'interface radio en particulier) lorsqu'une communication temps réel audio ou visiophonique est établie.

On comprendra que le présent procédé n'est pas limité aux modes de réalisation des figures 1a et 1b et s'applique à tout type d'architecture dans laquelle un premier terminal 1a est connecté à un réseau de communication 20 via un réseau opérateur 21.

### Principe de l'invention

L'invention propose un procédé de contrôle d'une communication téléphonique dans lequel la qualité de la communication téléphonique peut être dégradée lorsqu'un critère d'activation de la dégradation de la communication téléphonique est activé. La technique connue consistant à diminuer le débit autorisé pour la transmission des flux de données (« data ») sur réseau mobile IP (2G/3G/4G) ne peut être utilisée ici.

La partie données (appelée « service data ») est en effet supervisée pour chacun des clients via la fonction dite PCC (« Policy and Charging Control », en français contrôle d'accès et de facturation). Ainsi, lorsque l'on propose un abonnement mobile avec par exemple 3 Giga-octets de « data », le PCC supervise en temps réel la consommation de données, par exemple en allouant des micro-crédits de 10 ou 100 Méga-octets jusqu'à ce que les 3 Giga-octets soient consommées. Lorsque l'utilisateur abonné a consommé les 3 Giga-octets de son abonnement, les flux de données émis ou reçus par le terminal de l'utilisateur peuvent subir des dégradations. Par exemple, le flux de données peut être bloqué ou bien la bande passante de transmission du flux de données peut être très fortement diminuée. Une telle diminution permet ainsi d'offrir à l'utilisateur l'accès à certains services tels que les courriels sans pièce jointe mais pas à d'autres services nécessitant une bande passante plus élevée, tels que des téléchargements vidéos. :
Un tel fonctionnement ne peut pas être appliqué sur une communication téléphonique fixe ou mobile..

En effet, les paramètres d'une communication téléphonique sur réseau fixe fonctionnant en mode circuit ne peuvent pas être modifiés. Une seul codec G711 est utilisé pour la voix avec un débit de transmission constant de 64kbits/s.

Pour une communication en mode VoIP, les réseaux de communication VoIP s'interconnectent directement en mode VoIP de manière à optimiser les coûts, le serveur de vérification 4 ne peut plus être déclenché.

De plus, une dégradation de la communication téléphonique doit prendre en compte la contrainte selon laquelle bien que la communication téléphonique ait une qualité dégradée, la communication téléphonique dégradée doit rester audible ou visible dans le cas d'une communication visiophonique. Ainsi, n'importe quelle dégradation de la communication n'est pas possible, notamment la diminution importante du débit de transmission sans tenir compte de l'aspect audible ou visible de la communication ou bien le blocage des flux de données audio ou vidéo de la communication téléphonique. De plus, bien que dégradée, la communication téléphonique doit tout de même répondre aux exigences du temps réel ou quasi temps réel. Une telle contrainte n'est pas toujours respectée lors d'une forte diminution du débit de transmission.

Dans le présent procédé, cette difficulté est résolue car le serveur de vérification 4 peut être:
- soit déclenché directement en VoIP grâce à l'intégration au serveur applicatif téléphonique 3 AS d'une nouvelle interface visible sur la figure 1a, par exemple une interface LDAP (« Lighweight Directory Access Protocol »), ou bien une interface HTTP (« Hyper Text Transfer Protocol »), ou une interface selon le protocole DIAMETER (un protocole d'authentification, successeur du protocole RADIUS), ou bien encore en protocole INAP via l'ajout d'une fonction IM-SSF (« IP Multimedia- Service Switching Function ») qui permet l'accès aux services du réseau intelligent (en mode circuit) à partir du réseau de communication IMS, i.e. directement depuis le réseau opérateur 21 ;
- soit intégré au serveur applicatif AS 3.

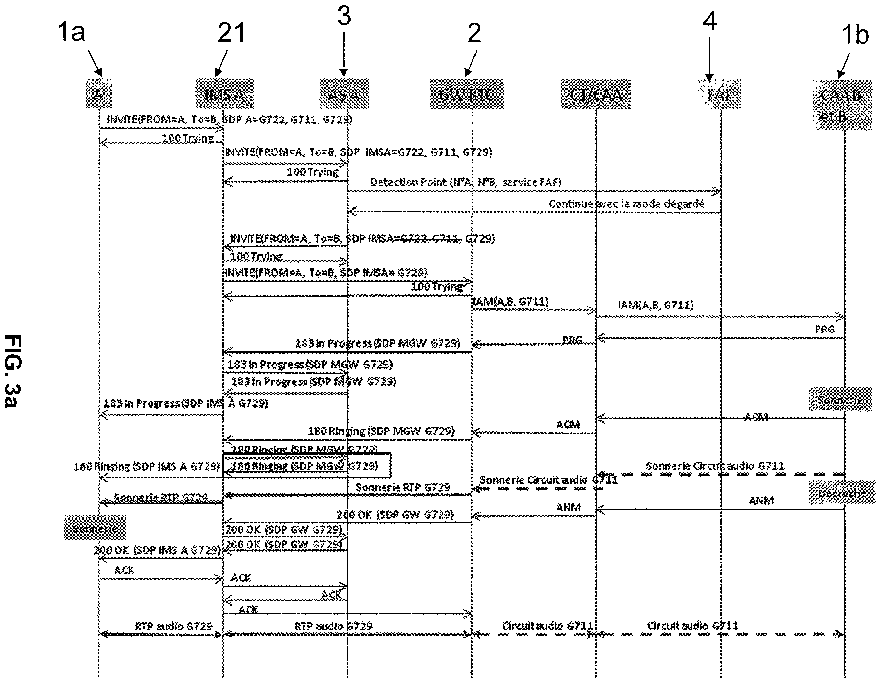

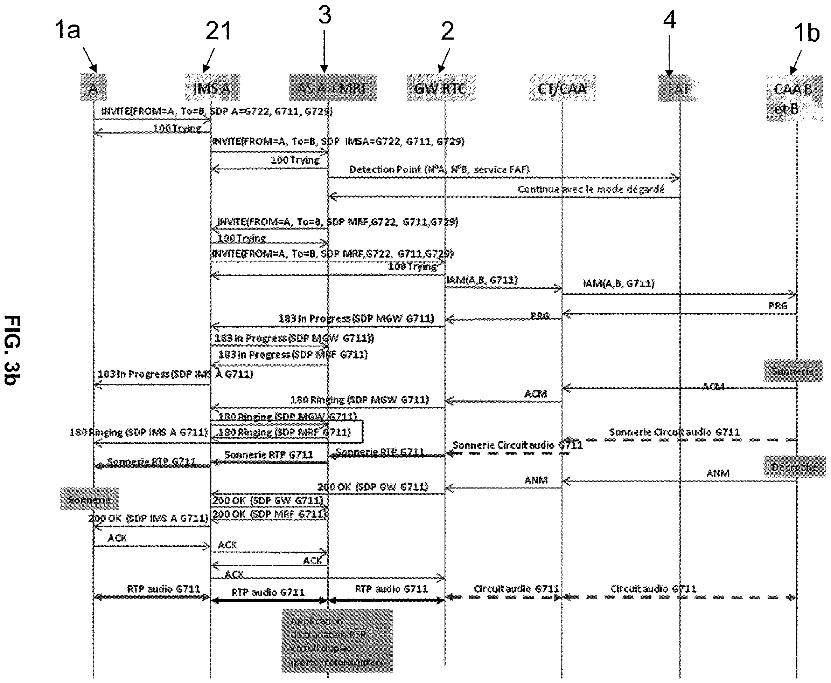

En référence aux **figures 3a** **et** **3b**, qui décrivent deux modes de réalisation alternatifs, le présent procédé commence ainsi par une étape (a) de réception par le serveur applicatif 3 AS (typiquement via un S-CSCF du réseau opérateur 21) d'une requête d'établissement (en particulier le message SIP *INVITE*) d'une communication téléphonique entre le premier terminal 1a et le deuxième terminal 1b, ladite requête comprenant un identifiant du premier terminal 1a, un identifiant du deuxième terminal 1b et au moins un paramètre descriptif de ladite communication téléphonique. On note que le serveur applicatif 3 AS reçoit toujours les requêtes d'établissement d'une communication au cas où des services téléphoniques doivent être mis en oeuvre lors de l'établissement de la communication.

Le paramètre descriptif compris dans la requête d'établissement de la communication téléphonique est représentatif d'un facteur qualitatif de la communication. De façon préférée (cas de la figure 3a), un tel paramètre représentatif correspond à un codec pour la mise en oeuvre de la communication téléphonique. En effet, il est connu d'inclure dans un message SIP INVITE, un groupe de paramètres, appelé « offre SDP » (pour « Session Description Protocol »), utilisés pour l'initialisation de la communication. Une telle offre SDP comprend traditionnellement les codecs supportés par le premier terminal 1a (par exemple le codec Wideband G722, le codec standard du mode circuit G711, et un codec de moins bonne qualité pour optimiser la bande passante G729). On verra d'autres paramètres souhaitables plus loin.

Dans une deuxième étape (b) originale, le serveur 3 AS interroge en fonction des identifiants des premier et deuxième terminaux 1a, 1b une base de données d'identifiants. Une telle base de données d'identifiants contient notamment des compteurs associés à chaque terminal 1a, 1b. L'interrogation par le serveur 3 AS permet de déterminer si un mode de communication dégradé doit être activé pour la communication téléphonique à établir.

Selon un mode particulier de réalisation de l'invention, ladite base de données d'identifiants est comprise dans le serveur de vérification 4, et l'étape (b) comprend :
- l'émission d'une requête auxiliaire à destination du serveur de vérification 4, ladite requête comprenant l'identifiant du premier terminal 1a et l'identifiant du deuxième terminal 1b, une telle requête auxiliaire correspond par exemple à la première requête d'établissement de la communication émise par le terminal 1a, et
- la réception d'une réponse à ladite requête auxiliaire indiquant si le mode de communication dégradée doit être activé.

En d'autres termes, contrairement à ce qui se faisait avant, c'est le serveur applicatif 3 AS qui interroge directement le serveur de vérification 4, et reçoit ainsi sa réponse (au lieu d'un commutateur CT).

Selon un mode particulier de réalisation de l'invention, le serveur applicatif 3, qui reçoit en premier toutes les requêtes d'établissement d'une communication, sous la forme de messages SIP *INVITE*, est configuré pour déterminer si le numéro appelant est dans une liste de numéros à surveiller, et le cas échéant le signaler au serveur de vérification 4. En d'autres termes, le mode dégradé ne peut être mis en oeuvre que si l'identifiant du deuxième terminal 1b appartient dans ladite base de données identifiants à une liste d'identifiants appelés à surveiller.

Lors de l'étape (b), le serveur 4 vérifie si le seuil d'appels associé au numéro appelant est atteint. Si un seuil d'appel associé à l'identifiant du premier terminal 1a dans ladite base de données d'identifiants est atteint, une alerte est déclenchée au niveau du serveur 4. Une telle alerte est traitée ici comme une activation d'un mode dégradé et non un simple blocage de l'appel.

Alternativement, le serveur de vérification 4 est intégrée au serveur applicatif 3, y compris la base de données, et toute l'étape (b) se passe de façon interne à ce dernier serveur 3.

Ensuite, si le mode de communication dégradé est activé, le procédé comprend une étape (c) de modification dans ladite requête d'établissement d'une communication du paramètre descriptif. Le paramètre descriptif modifié est choisi représentatif d'une qualité de communication dégradée par rapport au paramètre descriptif initial, de sorte à permettre la dégradation de la qualité de la communication.

La requête modifiée est alors retransmise dans le réseau opérateur 21 (typiquement d'où elle vient, c'est-à-dire le S-CSCF) pour établissement de la communication téléphonique via le réseau 20. Selon l'invention, le serveur applicatif 3 intercepte et modifie la requête d'établissement d'une communication, de façon transparente pour les équipements du réseau opérateur 21, qu'il n'est ainsi pas nécessaire de modifier.

On parle ainsi de « limitation » de la communication puisque celle-ci a effectivement lieu, contrairement à l'art antérieur où la communication était refusée, mais de façon incomplète et désagréable pour l'utilisateur.

### Paramètres descriptifs

Dans l'exemple de la figure 3a, le serveur 3 AS supprime les codecs wideband G.722 et narrow band G.711 et ne laisse dans l'offre SDP que le codec G.729. Un tel codec G729 fournit un taux de compression très élevé et donc une qualité moindre. Le paramètre descriptif initial est représentatif du codec G.711, G.722 ou G729 et le paramètre descriptif modifié étant représentatif du codec G.729. Ainsi, si le deuxième terminal 1b est également sur réseau VoIP, il ne pourra qu'accepter l'appel avec le codec de moindre qualité G.729. Si le deuxième terminal 1b est sur réseau circuit, alors le MGCF va piloter la MGW pour qu'elle utilise le codec G.729 côté premier terminal 1a, et forcément le codec G.711 côté deuxième terminal 1b. Par conséquent, l'appel sera au final constitué d'un tronçon media codé selon le codec G.729 entre le premier terminal 1a et la MGW, puis d'un tronçon média codé selon le codec G.711 entre la MGW et le deuxième terminal 1b. La qualité sera donc dégradée pour l'appelant et l'appelé puisque la séquence média de bout en bout sera la suivante : codage G.729 dans le premier terminal 1a, décodage G.729 dans la MGW, puis recodage en G.711 dans la MGW d'un signal déjà détérioré en G.729 puis décodage G.711 par le commutateur téléphonique de l'appel.

Alternativement ou en complément (on comprendra que plusieurs paramètres descriptifs peuvent être simultanément concernés pour une dégradation de la qualité plus conséquente), ledit paramètre descriptif est représentatif d'une longueur de trame (paramètre « *ptime* »). Ainsi le paramètre modifié est par exemple représentatif de trames de 40/60/80/100 ms au lieu de 20ms en standard ce qui ajoute des délais et donc influe sur l'interactivité.

Encore alternativement ou en complément, ledit paramètre descriptif modifié est représentatif d'un mode « détecteur de silence » activé. L'activation du détecteur de silence VAD (« Voice Activation Détection ») dans l'offre SDP permet de débrayer l'envoi de paquets voix sur IP quand il y a des silences, ce qui fait que lorsque l'interlocuteur reparle, les premières syllabes sont perdues pendant le temps que le détecteur détecte la rupture du silence.

Encore alternativement ou en complément ledit paramètre descriptif modifié est représentatif d'un mode « Half Duplex » (i.e. communication à sens unique) activé. Selon cette variante, le paramètre initial est représentatif d'un mode « Full Duplex », i.e. communication à double sens. Le paramètre est changé de « *sendrecv* » à « *sendonly* » ou « *recvonly* ». Par conséquent, le service téléphonique est de facto inutilisable car l'utilisateur ne peut pas à la fois parler et écouter. L'appel pourrait aussi être coupé par le serveur AS 3 au bout de quelques secondes pour gêner la communication.

Dans un deuxième mode de réalisation représenté par la figure 3b, ledit paramètre descriptif modifié désigne un serveur média par lequel la communication doit transiter, typiquement un MRF (« Media Resource Function ») du réseau opérateur 21 IMS. Le serveur applicatif 3 force ainsi les flux média à transiter vers ce serveur média MRF. Selon ce mode particulier de réalisation de l'invention, le serveur média MRF est piloté par le serveur applicatif 3 de sorte que le serveur média MRF applique des traitements de dégradation sur les flux média. De tels traitements de dégradation sont, par exemple :
- Application de retard aléatoire plus ou moins important des paquets IP transportant le flux média, ce qui perturbe considérablement la qualité de la communication ;
- Application d'un algorithme d'un pourcentage de perte de paquets média RTP (>1%), ce qui perturbe considérablement la qualité de la communication ;
- Application d'un algorithme d'application de « jitter » (en français la « gigue », ce qui désigne le phénomène de fluctuation d'un signal qui peut être un glissement de phase ou une dispersion temporelle, entraînant des erreurs en sortie lors de la récupération des données) de paquets média RTP ce qui perturbe considérablement la qualité de la communication si la taille des buffers de gigue des terminaux 1a, 1b n'est pas correctement adaptée.

On comprendra que le présent procédé n'est limité à aucun paramètre descriptif (ou une combinaison de ceux-ci).

### Cas des réseaux mobiles

Dans le cas d'un réseau de communication mobile de la figure 1b, lorsque le premier terminal 1a est mis en marche sous couverture radio 4G, l'APN (« Access Point Name ») IMS est établi par défaut par le réseau 22. Cet APN est utilisé pour transporter la signalisation d'appel SIP entre le terminal et le coeur de réseau IMS. Un « default bearer » (en français support par défaut) APN IMS est créé.

Ce « default bearer » APN IMS a par exemple une QoS (pour Quality of Service) définie par un paramètre QCI (« QoS Class Identifier ») dont la valeur est 5 sur une échelle de 1 à 9. Une telle valeur correspond à un mode de transmission dans lequel la perte de paquets IP autorisée est limitée, et les paquets sont associés à une priorité importante.

Selon le mode particulier de réalisation décrit ici, le terminal 1a est connecté au réseau de communication mobile 22 ; Le terminal 1b est connecté au réseau de communication 20 qui peut être un réseau de communication fixe ou mobile.

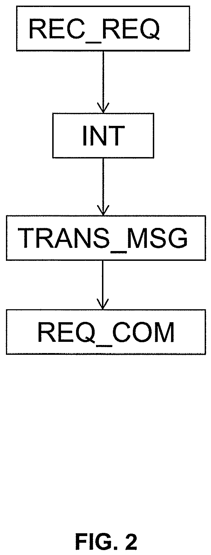

Lorsque le terminal 1a émet une demande d'établissement d'un appel audio/visiophonique vers le terminal 1b de la figure 2b, le P-CSCF informe le PCRF d'une demande de réservation de ressource média en fonction du codec négocié par le protocole SDP encapsulé dans le protocole SIP.

Suite à l'étape de réception d'une demande de réservation de ressources média,de manière connue:
- le PCRF fait une demande de réservation ressource, après diverses vérifications, auprès du PCEF ;
- -le PCEF transfère la demande à la PGW,
- la PGW transfère la demande vers la SGW,
- la SGWtransfère la demande au MME,
   le MME transfère la demande à l'eNode B. Ainsi en complément du « default bearer » transportant la signalisation SIP, un ou plusieurs « dedicated bearer » (en français support dédié) ayant des valeurs de QCI différentes sont établis pour le transfert du ou des flux média. Par exemple, un « dedicated bearer » est établi avec un QCI de 1 pour l'audio. Une telle valeur correspond à un taux de 1% de pertes de paquets IP autorisé au maximum, un délai de 30 ms maximum entre le terminal 1a et le PGW, et une priorité la plus importante associée à la transmission des flux média.. La transmission des flux média d'une communication téléphonique audio ou visiophonique est prioritaire par rapport au reste du trafic de données des terminaux attachés sur la même cellule radio.

Dans les paramètres descriptifs SDP compris dans la requête d'établissement de la communication SIP *INVITE* et dans la réponse SIP *183*/*200 OK* à une telle requête, des paramètres de bande passante sont fournis en plus des codecs..

Par exemple, lorsque le codec Wideband AMR WB est négocié dans le protocole SDP encapsulé dans le protocole SIP, la bande passante nécessaire à l'accès pour un flux média codé selon ce codec est indiquée dans la requête d'établissement de la communication, avec le paramètre *« b:AS:41* (kbit/s) ».

Une telle valeur de bande passante nécessaire pour transporter le codec et l'encapsulation RTP est insérée par les terminaux et équipements réseaux dans l'offre SDP.

Cette information remonte après de nombreux contrôles opérés par le PCRF jusqu'au eNodeB qui va réserver des ressources radio dédiée à la communication à établir.

Si cette valeur est trop faible, la qualité de la communication va être dégradée. Si au contraire, cette valeur est trop importante, des ressources vont être réservées inutilement.

Ainsi, selon un mode particulier de réalisation de l'invention, lorsque le serveur applicatif 3 reçoit la demande d'établissement d'appel (message INVITE(FROM=A, To=B, SDP IMSA=G722, G711, G729) envoyé par 21 à 3 sur la figure 3b), , le serveur applicatif 3 interroge le serveur de vérification 4 (« Détection Point (N°A, N°B, service FAF) » de la figure 3b) pour déterminer si un mode dégradé doit être activé pour établir la communication.
Le serveur de vérification 4 détermine à partir de l'identifiant du terminal A et des informations comprise de la base de données d'identifiants si le mode dégradé doit être activé. Par exemple, le mode dégradé doit être activé si le nombre d'appels émis par le terminal A à destination d'un service surtaxé est supérieur à un seuil prédéterminé, ou si le seuil de communication autorisé a été atteint. Selon un autre exemple, le mode dégradé doit être activé si la durée des communications émises par le terminal A est supérieure à une durée maximale prédéterminée.
Le serveur de vérification 4 répond au serveur applicatif 3 (message « Continue avec le mode dégradé » sur la figure 3b) en indiquant si le mode dégradé doit être activé ou non. Si le mode dégradé est activé, le serveur applicatif 3 modifie un paramètre descriptif initial de la requête d'établissement de la communication. Par exemple, le serveur applicatif 3 modifie le paramètre « *b:AS* » de l'offre SDP. La valeur initiale d'un tel paramètre est alors diminuée. Ainsi la qualité de la communication sera dégradée puisque la bande passante nécessaire à l'accès radio ne sera pas suffisante même si le QCI=1 est toujours utilisé.

Selon d'autres variantes, le serveur applicatif 3 peut modifier un autre paramètre descriptif initial de la requête d'établissement seul ou en combinaison avec d'autres paramètres descriptifs.

Selon un autre mode particulier de réalisation de l'invention, la solution consistant à utiliser un QCI différent de 1 lorsque le seuil de communication est atteint est aussi possible. Dans ce cas, le contrôle est réalisé par l'équipement PCRF.

Lorsque le terminal 1a émet une demande de communication audio ou visiophonique à destination du terminal 1B, par exemple sous la forme d'un message SIP INVITE, le serveur P-CSCF envoie au serveur PCRF une demande de réservation de ressources média en vue d'établir la communication demandée via ces ressources. Lors de l'étape REC_REQ illustrée à la figure 2, le serveur PCRF reçoit une demande de réservation de ressource média en provenance du P-CSCF. La demande de réservation de ressource comprend un identifiant du terminal 1a ayant initié l'appel, et les paramètres de l'offre SDP comprise dans la demande d'établissement d'appel émise par le terminal 1a. De tels paramètres sont des paramètres descriptifs initiaux de la communication à établir. L'identifiant du terminal 1a est par exemple le numéro IMSI (pour International Mobile Subscriber Identity en anglais) de ce terminal.
Lors de l'étape INT de la figure 2, le serveur PCRF interroge une base de données d'identifiants pour déterminer si un mode dégradé de la communication doit être activé. Selon ce mode particulier de réalisation de l'invention, la base de données d'identifiants est comprise dans le serveur PCRF. Le serveur PCRF détermine à partir de l'identifiant du terminal 1a et des informations comprise de la base de données d'identifiants si le mode dégradé doit être activé. Le serveur PCRF supervise en permanence les sessions de communication téléphonique VoIP depuis l'établissement d'une session de communication jusqu'à la fin de la session de communication établie ; Il dispose donc dans la base de données d'identifiants d'informations relative à un terminal appelant telle que la durée de communications, ou le nombre d'appels émis.
Par exemple, le mode dégradé doit être activé si le nombre d'appels émis par le terminal 1a à destination d'un service surtaxé est supérieur à un seuil prédéterminé, ou si le seuil de communication autorisé a été atteint. Selon un autre exemple, le mode dégradé doit être activé si la durée des communications émises par le terminal 1a est supérieure à une durée maximale prédéterminée.
et

Selon une première variante de ce mode particulier de réalisation de l'invention, lorsque le PCRF détecte que la durée maximale d'une communication établie est atteinte, par exemple 3 heures, le PCRF modifie la qualité de la communication en cours. Ainsi, l'appelant est incité à raccrocher pour libérer les ressources de la cellule radio utilisées. La qualité de la communication est modifiée par exemple en diminuant la valeur du QCI affecté à la communication établie. La valeur de QCI modifiée est alors transmise au serveur P-CSCF lors de l'étape TRANS_MSG de la figure 2. Le serveur P-CSCF transmet la valeur de QCI modifiée aux autres serveurs du réseau de communication mobile 22.

Selon une deuxième variante, le PCRF dispose du numéro de l'appelé 1b. Selon cette deuxième variante, le PCRF dégrade la qualité de la communication à établir ou la qualité de la communication en cours, en modifiant un paramètre descriptif initial. Par exemple, la valeur du paramètre de bande passante « *b:AS* » est diminué. Lors de l'étape TRANS_MSG de la figure 2, le PCRF notifie le serveur P-CSCF d'une modification du paramètre descriptif initial.

Lorsque la communication entre le terminal 1a et le terminal 1b est n'est pas encore établie, le serveur P-CSCF envoie lors de l'étape REQ_COM de la figure 2, la requête de demande d'établissement SIP INVITE comprenant le paramètre descriptif modifié à destination du terminal appelé afin d'établir la communication de manière dégradée.

Lorsque la communication entre le terminal 1a et le terminal 1b est déjà établie, le serveur P-CSCF renégocie les paramètres de la session de communication vers l'appelant et l'appelé via la transmission d'un message SIP Re-Invite au terminal appelant 1a et au terminal appelé 1b, envoyé lors de l'étape REQ_COM de la figure 2. Un tel message comprend le paramètre descriptif modifié par le PCRF.

Selon d'autres variantes, le PCRF peut appliquer des règles de dégradations de la communication prenant en compte :
- la localisation du terminal appelant 1a, par exemple si le terminal appelant 1a est connecté via le réseau de son opérateur, connexion dit « Home », ou si le terminal appelant 1a est connecté via le réseau d'un autre opérateur, connexion dit « Roaming out », ou
- le type de connectivité à l'accès, par exemple si le terminal appelant 1a est connecté via un accès 3GPP tels que 3G, 4G, 5G ou si le terminal appelant 1a est connecté via un accès non 3GPP, tel que Wifi..

### Serveur

Selon un deuxième aspect, l'invention concerne un serveur pour la mise en oeuvre du procédé selon le premier aspect qui est le contrôle d'une communication téléphonique initiée par un premier terminal 1a connecté à un réseau de communication 20 via le réseau opérateur 21.

Comme expliqué, ce serveur appartient à un réseau opérateur 21, par exemple un réseau IMS, lequel est en connexion avec un réseau de communication 20, par exemple un réseau circuit, via une passerelle 2.

Le serveur 3 comprend un module de traitement de données, tel qu'un processeur configuré pour :
- Recevoir une requête relative à une demande d'établissement d'une communication téléphonique entre le premier terminal 1a et le deuxième terminal 1b, ladite requête comprenant au moins un identifiant du premier terminal 1a, et au moins un paramètre descriptif initial de ladite communication téléphonique ;
- Interroger en fonction de l'identifiant du premier terminal 1a une base de données d'identifiants, de sorte à déterminer si un mode de communication dégradé doit être activé ;
- Si le mode de communication dégradé est activé :
   ∘ modifier le paramètre descriptif initial,
   ∘ transmettre un message comprenant le paramètre descriptif modifié, ledit message étant destiné à établir la communication téléphonique via le réseau de communication (20) ou à modifier la communication téléphonique en cours entre le premier terminal et le deuxième terminal, , le paramètre descriptif modifié étant représentatif d'une qualité de communication dégradée par rapport au paramètre descriptif initial.
   ∘ .

Selon un premier mode de réalisation, le serveur est un serveur applicatif 3 et est connecté (via une interface IM-SSF, http ou LDAP) au serveur de vérification 4. Le serveur de vérification 4 stocke la base de données et réalise le test pour savoir si le mode dégradé doit être activé.

Alternativement, le serveur 3 comprend lui-même un module de stockage de données, tel qu'une mémoire, par exemple un disque dur, stockant ladite base de données d'identifiants ; Le serveur 3 réalise alors le test pour savoir si le mode dégradé doit être activé.

Selon un autre mode particulier de réalisation de l'invention, le procédé de contrôle est mis en oeuvre par le serveur PCRF du réseau de communication mobile 22 de la figure 1b. Un tel serveur PCRF comprend un module de traitement de données, tel qu'un processeur configuré pour :
- Recevoir une requête relative à une demande d'établissement d'une communication téléphonique entre le premier terminal 1a et le deuxième terminal 1b, ladite requête comprenant au moins un identifiant du premier terminal 1a, et au moins un paramètre descriptif initial de ladite communication téléphonique ;
- Interroger en fonction de l'identifiant du premier terminal 1a une base de données d'identifiants, de sorte à déterminer si un mode de communication dégradé doit être activé ;
- Si le mode de communication dégradé est activé :
   ∘ modifier le paramètre descriptif initial,
- transmettre un message comprenant le paramètre descriptif modifié, ledit message étant destiné à établir la communication téléphonique via le réseau de communication (20) ou à modifier la communication téléphonique en cours entre le premier terminal et le deuxième terminal, le paramètre descriptif modifié étant représentatif d'une qualité de communication dégradée par rapport au paramètre descriptif initial.

### Produit programme d'ordinateur

Selon un troisième et un quatrième aspects, l'invention concerne un produit programme d'ordinateur comprenant des instructions de code pour l'exécution, en particulier sur des moyens de traitement du serveur 3, d'un procédé selon le deuxième aspect de l'invention de contrôle d'une communication téléphonique initiée par un premier terminal 1a connecté à un réseau de communication 20 via un réseau opérateur 21, ainsi que des moyens de stockage lisibles par un équipement informatique, par exemple une mémoire du serveur 3, sur lequel on trouve ce produit programme d'ordinateur.

## Revendications

1. Procédé de contrôle d'une communication téléphonique initiée par un premier terminal (1a) connecté à un réseau de communication (20) via un réseau opérateur (21), le procédé comprenant la mise en oeuvre par un serveur (AS, PCRF)du réseau opérateur (21) d'étapes de :
(a) Réception d'une requête relative à une demande d'établissement d'une communication téléphonique entre le premier terminal (1a) et un deuxième terminal (1b), ladite requête comprenant un identifiant du premier terminal (1a), un identifiant du deuxième terminal (1b) et au moins un paramètre descriptif initial de ladite communication téléphonique ;
(b) Détermination si un mode de communication dégradé doit être activé par une interrogation en fonction de l'identifiant du premier terminal (1a) et de l'identifiant du deuxième terminal (1b) d'une base de données d'identifiants, le mode de communication dégradé étant activé lorsque ladite base de données d'identifiants indique que le nombre d'appels du premier terminal (1a) vers le deuxième terminal (1b) est supérieur à un seuil, ou que la durée des communications émises par le premier terminal (1a) à destination du second terminal (1b) est supérieure à un seuil;
(c) Si le mode de communication dégradé est activé,
∘ modification du paramètre descriptif initial,
∘ transmission à un serveur de gestion (P-CSCF) du réseau opérateur (21) d'un message comprenant le paramètre descriptif modifié , ledit message étant destiné à établir la communication téléphonique via le réseau de communication (20) ou à modifier la communication téléphonique en cours entre le premier terminal et le deuxième terminal, le paramètre descriptif modifié étant représentatif d'une qualité de communication dégradée par rapport au paramètre descriptif initial.

2. Procédé selon la revendication 1, dans lequel la requête relative à une demande d'établissement d'une communication téléphonique est une requête de réservation de ressources pour établir la communication entre le premier terminal et le deuxième terminal.

3. Procédé selon la revendication 1, dans lequel la requête relative à une demande d'établissement d'une communication téléphonique est une demande d'établissement d'une communication téléphonique émise par le premier terminal.

4. Procédé selon la revendication 1, dans lequel l'étape (b) est mise en oeuvre seulement si l'identifiant du deuxième terminal (1b) appartient à une liste d'identifiants appelés à surveiller comprise dans le serveur (AS, PCRF) du réseau opérateur (21).

5. Procédé selon la revendication 3, dans lequel ladite base de données d'identifiants est celle d'un serveur de vérification (4), l'étape (b) comprenant :
- l'émission d'une requête auxiliaire à destination du serveur de vérification (4), ladite requête comprenant l'identifiant du premier terminal (1a) et l'identifiant du deuxième terminal (1b), et
- la réception d'une réponse à ladite requête auxiliaire indiquant si le mode de communication dégradée doit être activé.

6. Procédé selon la revendication 2, dans lequel le serveur du réseau opérateur (21) est un serveur (PCRF) de gestion de la qualité de communication, et ledit paramètre descriptif est représentatif d'une valeur de classe de qualité affectée au service de communication par le serveur de gestion de la qualité de communication (PCRF).

7. Procédé selon l'une des revendications 1 à 6, dans lequel ledit paramètre descriptif initial est représentatif d'un codec audio ou vidéo pour la mise en oeuvre de la communication téléphonique,
et dans lequel le paramètre descriptif modifié est représentatif d'un codec audio ou vidéo offrant une qualité de communication inférieure à la qualité de communication offerte par le codec audio ou vidéo représenté par le paramètre descriptif initial.

8. Procédé selon l'une des revendications 1 à 7, dans lequel ledit paramètre descriptif modifié est représentatif :
▪ d'une longueur de trame augmentée par rapport à une longueur de trame initiale, ou
▪ d'un mode « détecteur de silence » activé, ou
▪ d'un mode « Half Duplex » activé, ou
▪ d'une adresse désignant un serveur média par lequel la communication doit transiter, le serveur media étant configuré pour appliquer au moins un traitement dégradant la communication.

9. Serveur d'un réseau opérateur (21) pour le contrôle d'une communication téléphonique initiée par un premier terminal (1a) connecté à un réseau de communication (20) via le réseau opérateur (21), le serveur comprenant un module de traitement de données configuré pour :
- Recevoir une requête relative à une demande d'établissement d'une communication téléphonique entre le premier terminal (1a) et un deuxième terminal (1b), ladite requête comprenant un identifiant du premier terminal (1a), un identifiant du deuxième terminal (1b), et au moins un paramètre descriptif initial de ladite communication téléphonique ;
- Interroger en fonction de l'identifiant du premier terminal (1a) et de l'identifiant du deuxième terminal (1b) une base de données d'identifiants, et déterminer si un mode de communication dégradé doit être activé, le mode de communication dégradé étant activé lorsque ladite base de données d'identifiants indique que le nombre d'appels du premier terminal (1a) vers le deuxième terminal (1b) est supérieur à un seuil, ou que la durée des communications émises par le premier terminal (1a) à destination du second terminal (1b) est supérieure à un seuil ;
∘ Si le mode de communication dégradé est activé,
▪ modifier le paramètre descriptif initial,
▪ transmettre à un serveur de gestion (P-CSCF) du réseau opérateur (21) un message comprenant le paramètre descriptif modifié, ledit message étant destiné à établir la communication téléphonique via le réseau de communication (20) ou à modifier la communication téléphonique en cours entre le premier terminal et le deuxième terminal, le paramètre descriptif modifié étant représentatif d'une qualité de communication dégradée par rapport au paramètre descriptif initial.

10. Serveur selon la revendication 9, comprenant en outre un module de stockage de données stockant ladite base de données d'identifiants.

11. Produit programme d'ordinateur comprenant des instructions de code pour l'exécution d'un procédé selon l'une des revendications 1 à 8 de contrôle d'une communication téléphonique initiée par un premier terminal (1a) connecté à un réseau de communication (20) via un réseau opérateur (21).

12. Support de stockage lisible par un équipement informatique sur lequel un produit programme d'ordinateur comprend des instructions de code pour l'exécution d'un procédé selon l'une des revendications 1 à 8 de contrôle d'une communication téléphonique initiée par un premier terminal (1a) connecté à un réseau de communication (20) via un réseau opérateur (21).

## Patentansprüche

1. Verfahren zur Kontrolle einer Telefonverbindung, die von einem ersten Endgerät (1a) initiiert wird, das über ein Betreibernetz (21) an ein Kommunikationsnetz (20) angeschlossen ist, wobei das Verfahren die Durchführung folgender Schritte durch einen Server (AS, PCRF) des Betreibernetzes (21) enthält:
(a) Empfang eines Antrags bezüglich einer Aufbauanforderung einer Telefonverbindung zwischen dem ersten Endgerät (1a) und einem zweiten Endgerät (1b), wobei der Antrag eine Kennung des ersten Endgeräts (1a), eine Kennung des zweiten Endgeräts (1b) und mindestens einen beschreibenden Ausgangsparameter der Telefonverbindung enthält;
(b) Bestimmung, ob ein eingeschränkter Verbindungsmodus aktiviert werden soll, durch eine Abfrage einer Kennungsdatenbank abhängig von der Kennung des ersten Endgeräts (1a) und der Kennung des zweiten Endgeräts (1b), wobei der eingeschränkte Verbindungsmodus aktiviert wird, wenn die Kennungsdatenbank anzeigt, dass die Anzahl von Anrufen vom ersten Endgerät (1a) zum zweiten Endgerät (1b) höher als eine Schwelle ist, oder dass die Dauer der vom ersten Endgerät (1a) an das zweite Endgerät (1b) gesendeten Verbindungen höher als eine Schwelle ist;
(c) wenn der eingeschränkte Verbindungsmodus aktiviert ist,
∘ Änderung des beschreibenden Ausgangsparameters,
∘ Übertragung an einen Verwaltungsserver (P-CSCF) des Betreibernetzes (21) einer Nachricht, die den geänderten beschreibenden Parameter enthält, wobei die Nachricht dazu bestimmt ist, die Telefonverbindung über das Kommunikationsnetz (20) aufzubauen oder die laufende Telefonverbindung zwischen dem ersten Endgerät und dem zweiten Endgerät zu ändern, wobei der geänderte beschreibende Parameter für eine bezüglich des beschreibenden Ausgangsparameters eingeschränkte Verbindungsqualität repräsentativ ist.

2. Verfahren nach Anspruch 1, wobei der Antrag bezüglich einer Aufbauanforderung einer Telefonverbindung ein Antrag zur Reservierung von Ressourcen ist, um die Verbindung zwischen dem ersten Endgerät und dem zweiten Endgerät aufzubauen.

3. Verfahren nach Anspruch 1, wobei der Antrag bezüglich einer Aufbauanforderung einer Telefonverbindung eine vom ersten Endgerät gesendete Aufbauanforderung einer Telefonverbindung ist.

4. Verfahren nach Anspruch 1, wobei der Schritt (b) nur durchgeführt wird, wenn die Kennung des zweiten Endgeräts (1b) zu einer Liste von zu überwachenden angerufenen Kennungen gehört, die im Server (AS, PCRF) des Betreibernetzes (21) enthalten ist.

5. Verfahren nach Anspruch 3, wobei die Kennungsdatenbank diejenige eines Überprüfungsservers (4) ist, wobei der Schritt (b) enthält:
- das Senden eines Hilfsantrags an den Überprüfungsserver (4), wobei der Antrag die Kennung des ersten Endgeräts (1a) und die Kennung des zweiten Endgeräts (1b) enthält, und
- den Empfang einer Antwort auf den Hilfsantrag, die anzeigt, ob der eingeschränkte Verbindungsmodus aktiviert werden soll.

6. Verfahren nach Anspruch 2, wobei der Server des Betreibernetzes (21) ein Verwaltungsserver (PCRF) der Verbindungsqualität ist, und der beschreibende Parameter für einen Qualitätsklassenwert repräsentativ ist, der dem Verbindungsdienst durch den Verwaltungsserver der Verbindungsqualität (PCRF) zugeteilt wird.

7. Verfahren nach einem der Ansprüche 1 bis 6, wobei der beschreibende Ausgangsparameter für einen Audio- oder Video-Codec zur Durchführung der Telefonverbindung repräsentativ ist,
und wobei der geänderte beschreibende Parameter für einen Audio- oder Video-Codec repräsentativ ist, der eine niedrigere Verbindungsqualität als die vom durch den beschreibenden Ausgangsparameter dargestellten Audio- oder Video-Codec angebotene Verbindungsqualität anbietet.

8. Verfahren nach einem der Ansprüche 1 bis 7, wobei der geänderte beschreibende Parameter repräsentativ ist für:
• eine bezüglich einer Ausgangsrahmenlänge vergrößerte Rahmenlänge, oder
• einen aktivierten Modus « Silence Detector », oder
• einen aktivierten Modus « Half Duplex », oder
• eine Adresse, die einen Mediaserver bezeichnet, über den die Verbindung gehen soll, wobei der Mediaserver konfiguriert ist, mindestens eine Verarbeitung anzuwenden, die die Verbindung einschränkt.

9. Server eines Betreibernetzes (21) zur Kontrolle einer Telefonverbindung, die von einem ersten Endgerät (1a) initiiert wird, das an ein Kommunikationsnetz (20) über das Betreibernetz (21) angeschlossen ist, wobei der Server ein Datenverarbeitungsmodul enthält, das konfiguriert ist:
- einen Antrag bezüglich einer Aufbauanforderung einer Telefonverbindung zwischen dem ersten Endgerät (1a) und einem zweiten Endgerät (1b) zu empfangen, wobei der Antrag eine Kennung des ersten Endgeräts (1a), eine Kennung des zweiten Endgeräts (1b) und mindestens einen beschreibenden Ausgangsparameter der Telefonverbindung enthält;
- abhängig von der Kennung des ersten Endgeräts (1a) und der Kennung des zweiten Endgeräts (1b) eine Kennungsdatenbank abzufragen und zu bestimmen, ob ein eingeschränkter Verbindungsmodus aktiviert werden soll, wobei der eingeschränkte Verbindungsmodus aktiviert wird, wenn die Kennungsdatenbank anzeigt, dass die Anzahl von Anrufen vom ersten Endgerät (1a) an das zweite Endgerät (1b) größer ist als eine Schwelle, oder dass die Dauer der vom ersten Endgerät (1a) an das zweite Endgerät (1b) gesendeten Verbindungen größer ist als eine Schwelle;
∘ wenn der eingeschränkte Verbindungsmodus aktiviert ist,
• Ändern des beschreibenden Ausgangsparameters,
• Übertragen an einen Verwaltungsserver (P-CSCF) des Betreibernetzes (21) einer Nachricht, die den geänderten beschreibenden Parameter enthält, wobei die Nachricht dazu bestimmt ist, die Telefonverbindung über das Kommunikationsnetz (20) aufzubauen oder die laufende Telefonverbindung zwischen dem ersten Endgerät und dem zweiten Endgerät zu ändern, wobei der geänderte beschreibende Parameter für eine bezüglich des beschreibenden Ausgangsparameters eingeschränkte Verbindungsqualität repräsentativ ist.

10. Server nach Anspruch 9, der außerdem ein Datenspeichermodul enthält, das die Kennungsdatenbank speichert.

11. Computerprogrammprodukt, das Codeanweisungen zur Ausführung eines Verfahrens nach einem der Ansprüche 1 bis 8 zur Kontrolle einer Telefonverbindung enthält, die von einem an ein Kommunikationsnetz (20) über ein Betreibernetz (21) angeschlossenen ersten Endgerät (1a) initiiert wird.

12. Speicherträger, der von einer EDV-Ausrüstung lesbar ist, auf dem ein Computerprogrammprodukt Codeanweisungen zur Ausführung eines Verfahrens nach einem der Ansprüche 1 bis 8 zur Kontrolle einer Telefonverbindung enthält, die von einem an ein Kommunikationsnetz (20) über ein Betreibernetz (21) angeschlossenen ersten Endgerät (1a) initiiert wird.

## Claims

1. Method for controlling a phone call initiated by a first terminal (1a) connected to a communications network (20) via an operator network (21), the method including the implementation by a server (AS, PCRF) of the operator network (21) of steps of:
(a) receiving a request to set up a phone call between the first terminal (1a) and a second terminal (1b), said request including an identifier of the first terminal (1a), an identifier of the second terminal (1b) and at least one initial descriptive parameter of said phone call;
(b) determining whether a degraded call mode must be activated by means of an interrogation of an identifier database according to the identifier of the first terminal (1a) and the identifier of the second terminal (1b), the degraded mode of communication being activated when said identifier database indicates that the number of calls of the first terminal (1a) to the second terminal (1b) is greater than a threshold, or that the duration of the communications emitted by the first terminal (1a) destined for the second terminal (1b) is greater than a threshold;
(c) if the degraded call mode is activated,
∘ modifying the initial descriptive parameter,
∘ transmitting a message to a management server (P-CSCF) of the operator network (21), said message including the modified descriptive parameter and being intended to set up the phone call via the communication network (20) or to modify the phone call in progress between the first terminal and the second terminal, the modified descriptive parameter representing a degraded call quality compared with the initial descriptive parameter.

2. Method according to Claim 1, in which the request to set up a phone call is a request to reserve resources in order to set up the call between the first terminal and the second terminal.

3. Method according to Claim 1, in which the request to set up a phone call is a request to set up a phone call transmitted by the first terminal.

4. Method according to Claim 1, in which step (b) is carried out only if the identifier of the second terminal (1b) belongs to a list of called identifiers to be monitored included in the server (AS, PCRF) of the operator network (21).

5. Method according to Claim 3, in which said identifier database is that of a verification server (4), step (b) including:
- transmitting an auxiliary request intended for the verification server (4), said request including the identifier of the first terminal (1a) and the identifier of the second terminal (1b), and
- receiving a response to said auxiliary request indicating whether the degraded call mode must be activated.

6. Method according to Claim 2, in which the server of the operator network (21) is a call quality management server (PCRF) and said descriptive parameter represents a quality class value allocated to the communication service by the call quality management server (PCRF).

7. Method according to one of Claims 1 to 6, in which said initial descriptive parameter represents an audio or video codec for implementing the phone call, and in which the modified descriptive parameter represents an audio or video codec offering a call quality inferior to the call quality offered by the audio or video codec represented by the initial descriptive parameter quality.

8. Method according to one of Claims 1 to 7, in which said modified descriptive parameter represents:
▪ an increased frame length compared with an initial frame length, or
▪ an activated "silence detector" mode, or
▪ an activated "half-duplex" mode, or
▪ an address designating a media server via which the call must be routed, the media server being configured to apply at least one processing operation degrading the call.

9. Server of a network operator (21) for controlling a phone call initiated by a first terminal (1a) connected to a communications network (20) via the operator network (21), the server including a data processing module configured to:
- receive a request to set up a phone call between the first terminal (1a) and a second terminal (1b), said request including an identifier of the first terminal (1a), an identifier of the second terminal (1b) and at least one initial descriptive parameter of said phone call;
- interrogate an identifier database according to the identifier of the first terminal (1a) and the identifier of the second terminal (1b) and determine whether a degraded call mode must be activated, the degraded mode of communication being activated when said identifier database indicates that the number of calls of the first terminal (1a) to the second terminal (1b) is greater than a threshold, or that the duration of the communications emitted by the first terminal (1a) destined for the second terminal (1b) is greater than a threshold;
∘ if the degraded call mode is activated,
▪ modify the initial descriptive parameter,
▪ transmit a message to a management server (P-CSCF) of the operator network (21), said message including the modified descriptive parameter and being intended to set up the phone call via the communications network (20) or to modify the phone call in progress between the first terminal and the second terminal, the modified descriptive parameter representing a degraded call quality compared with the initial descriptive parameter.

10. Server according to Claim 9, furthermore including a data storage module storing said identifier database.

11. Computer program product including code instructions for carrying out a method according to one of Claims 1 to 8 for controlling a phone call initiated by a first terminal (1a) connected to a communications network (20) via an operator network (21).

12. Computer-readable storage medium on which a computer program product includes code instructions to carry out a method according to one of Claims 1 to 8 for controlling a phone call initiated by a first terminal (1a) connected to a communication network (20) via an operator network (21).
